# EUROPÄISCHE PATENTSCHRIFT

(11) **EP 0 850 458 B1**
(45) Veröffentlichungstag und Bekanntmachung des Hinweises auf die Patenterteilung: **11.07.2001**
(21) Anmeldenummer: 96934403.5
(22) Anmeldetag: 02.09.1996
(51) Int. Cl.: G06K 9/03

(54) **ANZEIGEVORRICHTUNG ZUR FEHLERKORREKTUR BEI MUSTERERKENNUNG**
DISPLAY DEVICE FOR ERROR CORRECTION IN PATTERN RECOGNITION
DISPOSITIF D'AFFICHAGE POUR CORRECTION D'ERREURS LORS DE LA RECONNAISSANCE DES FORMES

(30) Priorität: 05.09.1995 DE 19532757
(43) Veröffentlichungstag der Anmeldung: 01.07.1998
(73) Patentinhaber: SIEMENS AKTIENGESELLSCHAFT, 80333 München (DE)
(72) Erfinder: TIEDEMANN, Christiane, D-91056 Erlangen (DE); KREBS, Stefan, D-90607 Rückersdorf (DE); SCHMIDT, Wolfgang, D-91315 Höchstadt (DE); SCHORR, Hubert, D-97475 Zeil (DE)
(86) Internationale Anmeldenummer: DE9601624
(87) Internationale Veröffentlichungsnummer: WO9709691

(56) Entgegenhaltungen:
- EP-A- 0 107 083
- EP-A- 0 726 540

## Beschreibung

Die Oberflächen von Objekten, insbesondere von Stückgütern, sind vielfach mit aufgedruckten bzw. manuell geschriebenen Texten beschriftet. Diese sind aus dem Vorrat der alphanumerischen Zeichen der jeweiligen Sprache zusammengesetzt. Dabei kann es sich z.B. um Typen-, Produkt,- Datums,- Zeit- oder Adreßangaben handeln. Die Beschriftungen können auf einer entsprechend gestalteten Fläche unmittelbar auf dem Stückgut bzw. auf einer Oberfläche einer brief-, paket- oder kistenförmigen Verpackung des Stückgutes angebracht sein.

Derartige Textinformationen müssen insbesondere dann, wenn Stückgüter bzw. Verpackungen in sehr großen Mengen anfallen, mit Hilfe von elektronischen Abtasteinrichtungen möglichst vollautomatisch erfaßt und mit schnellen elektronischen Recheneinrichtungen verarbeitet werden. Derartige Anwendungen treten z.B. bei der zieladressengesteuerten Verteilung von Briefen, Paketen oder Kisten z.B. in Postverteilanlagen oder Speditionen auf. Aber auch bei der Warenannahme und deren Verteilung in produktionstechnischen Anlagen, wie z.B. einem Kraftfahrzeugmontagewerk, müssen eine Vielzahl von unter Umständen heterogener Stückgüter bezüglich z.B. ihrer Menge, Herkunft, Typenbezeichnung, Bestimmung und Verwendungen möglichst vollautomatisch erfaßt werden.

Hierzu werden die Oberflächen von Stückgütern bzw. Verpackungen, welche einzelne Textelemente bzw. größere Textfelder aufweisen, mit elektronischen Abtasteinrichtungen abgetastet. Die hierbei anfallenden digitalen Bilddaten können dann z.B. in elektronischen Recheneinrichtungen mit Hilfe von sogenannten OCR Programmen ( optical charcter recognition ) in maschinenlesbaren Kodierungen umgewandelt und anschließend mit geeigneten Programmen ausgewertet werden. In vielen Fällen können auf diese Weise der Status eines zunächst unbekannten Stückgutes vollautomatisch erfaßt und dazugehörige Folgesteuerhandlungen selbsttätig ausgelöst werden.

Es treten aber auch Fälle auf, bei denen diese vollautomatische Texterkennung und Auswertung fehlschlägt. Die Ursachen hierfür liegen in aller Regel in einer schwer lesbaren, weil z.B. manuell aufgebrachten, verschmutzten bzw. wegen Oberflächenbeschädigungen teilweise verstümmelten Beschriftung. Stückgüter oder Verpackungen mit derartigen Texten müssen aus dem Strom der z.B. von einer Verteilanlage transportierten Gütern ausgeschleußt und einer singulären, manuellen Bearbeitung zugeführt werden. Hierbei muß in aller Regel eine Person versuchen, den verstümmelten oder unleserlichen Text zu rekonstruieren und manuell in elektronische Recheneinrichtung einzugeben, so daß diese dann die weitere Auswertung und Auslösung von Folgesteuerhandlungen wieder vollautomatisch fortsetzen kann.

Zur Erleichterung dieser manuellen Texterfassung und Eingabe, und damit zu deren Beschleunigung, werden sogenannte Bildschirmarbeitsplätze eingesetzt. Hierbei werden die unleserlichen Texte unter Zuhilfenahme von den durch die elektronische Abtasteinrichtung erfaßten digitalen Bilddaten auf Monitoren zur Anzeige gebracht. Die mit der Rekonstruktion der unleserlichen Texte befaßte Person kann somit die Textauswertung und anschließende manuelle Eingabe z.B. über eine Computertastatur vornehmen, ohne daß sie dabei das mit dem verstümmelten Text versehene Objekt selbst in die Hand zu nehmen braucht. Dieses kann vielmehr weiterhin z.B. auf Förderbändern oder in vollautomatischen Lagern unzugänglich verweilen, bis nach erfolgter manueller Eingabe der verstümmelten Textinformationen und der nun möglichen automatischen Identifikation des Objekts dessen vollautomatische Weiterbeförderung bzw. Bearbeitung fortgesetzt werden kann.

Der Erfindung liegt die Aufgabe zugrunde, eine Vorrichtung anzugeben, womit einer insbesondere an einem Bildschirmarbeitsplatz der oben genannten Art aktiven Person die Textelemente mit alphanumerischen Zeichen bzw. ganze Textfelder enthaltenden Bilddaten von der Oberfläche eines Objektes bereits vollautomatisch zumindest derart aufbereitet präsentiert werden können, daß die Erkennung von verstümmelten bzw. schwer lesbaren Texten erleichtert und somit insbesondere beschleunigt wird.

Die Aufgabe wird gelöst mit der in Anspruch 1 angegebenen Vorrichtung. Weitere Ausgestaltungen der Erfindung sind in den Unteransprüchen angegeben.

Die Erfindung wird mit den in den nachfolgend kurz angeführten Figuren dargestellten Beispielen weiter erläutert. Dabei zeigt
- Fig.1.: ein Blockschaltbild mit den Komponenten der erfindungsgemäßen Vorrichtung, und
- Fig.2.: ein Ausführungsbeispiel für den Aufbau einer mit der erfindungsgemäßen Vorrichtung erzielbaren Bildschirmdarstellung.

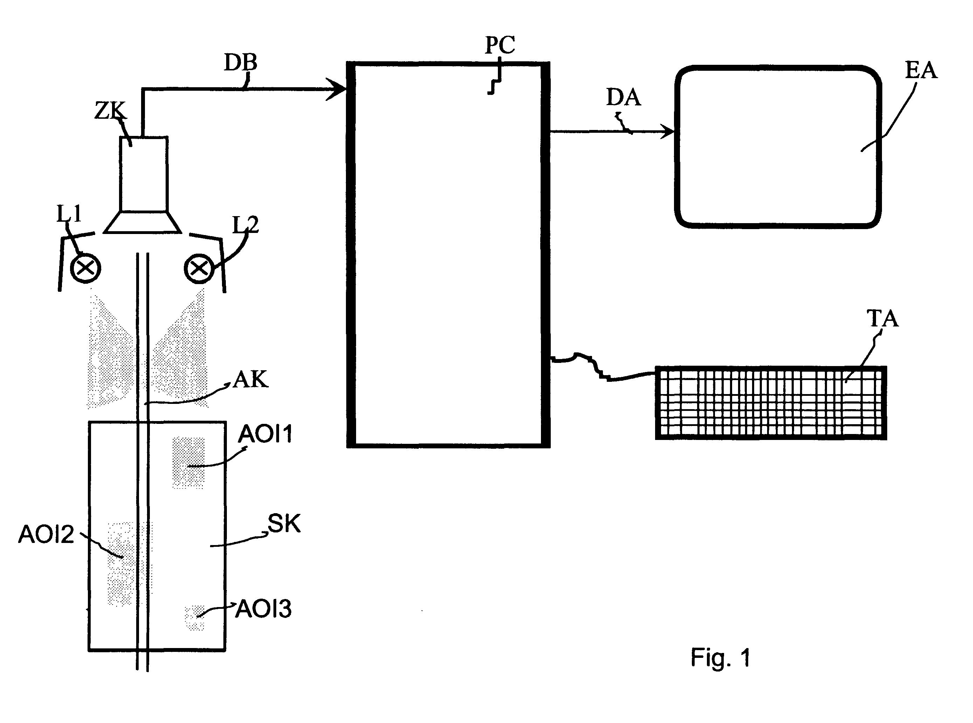

Die erfindungsgemäße Vorrichtung zur automatischen Visualisierung enthält gemäß dem Blockschaltbild von Figur 1 eine elektronische Abtasteinrichtung ZK, insbesondere in Form einer Videokamera. Diese tastet die Oberfläche eines Objektes, welches in Figur 1 beispielhaft in Form eines als ein Musterstückgut dienden Briefes SK dargestellt ist, bevorzugt zeilenförmig ab. Der Brief wird somit im Beispiel unter der mit AK bezeichneten Abtastzeile der Kamera ZK entlanggeführt. Vorteilhaft sind beidseitig der Abtastzeile AK bevorzugt stabförmige Beleuchtungseinheiten L1, L2 angeordnet.

Die von der elektronischen Abtasteinrichtung ZK erzeugten und ein Abbild der Oberfläche des Briefumschlages AK insbesondere in Form von pixelförmigen Helligkeitsintensitätswerten darstellenden digitalen Bilddaten DB werden einer elektronischen Recheneinrichtung PC zur weiteren Bearbeitung zugeführt. Nach Abschluß dieser Aufbereitung der Daten werden diese über eine Datenstrecke DA an eine elektronische Anzeigevorrichtung EA, insbesondere einen Monitor, weitergeleitet.

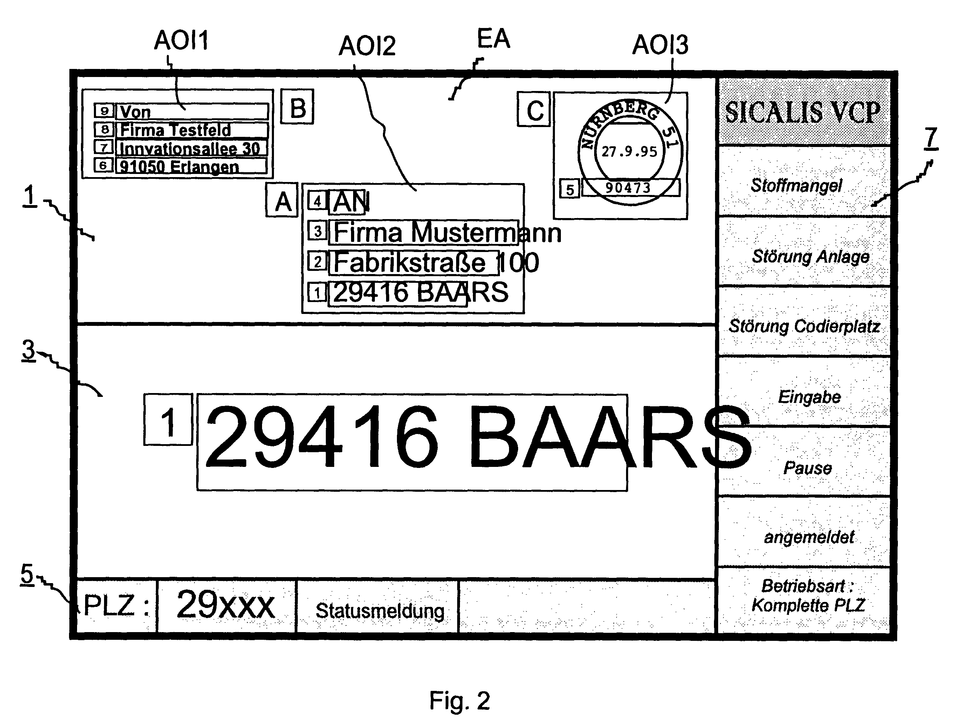

Die erfindungsgemäße Bearbeitung und Anzeige der Bilddaten auf der Anzeigevorrichtung EA wird nachfolgend am Beispiel einer in Figur 2 dargestellten Ausführungsform für eine gemäß der Erfindung erfolgten Bilddatenausgabe für einen in Figur 1 dargestellten Briefumschlag SK erläutert. Die erfindungsgemäße Vorrichtung ist aber natürlich auch zur Abtastung von beliebige anderen, mit Texten versehenen Oberflächen einsetzbar.

Die Oberfläche eines Briefumschlags enthält gemäß der Darstellung von Figur 1 in der Regel beispielhaft drei Bereiche, die einzelne Textelemente bzw. unter Umständen mehrzeilige Textfelder beinhalten. Diese Bereiche werden nachfolgend AOI1, AOI2, AOI3 genannt, wobei AOI als eine Kurzform des englischsprachigen Fachbegriffes "area of interest" darstellt. In diesen Bereichen sind diejenigen Informationen enthalten, welche nach einer Entschlüsselung durch eine Person eine maschinelle Identifikation und vollautomatische Weiterbearbeitung und Weiterleitung des jeweiligen Objektes ermöglicht.

Das Problem besteht nun darin, daß nicht alle Texte in diesen Bereichen für die jeweilige Identifikation benötigt werden. Vielmehr ist in der Regel bereits ein kleiner Teil der Texte für eine erfolgreiche Identifikation ausreichend, während der Großteil der Texte hierfür bedeutungslos ist. Handelt es sich z.B. um die Identifikation eines Bauelements, Bauteils, Ersatzteils oder dergleichen, welches z.B. in einer laufenden Produktion eingesetzt bzw. in einem automatischen Lager vorübergehend hinterlegt werden soll, so kann z.B. eine Produkt- oder Teilenummer für eine rechnermäßige Identifikation ausreichend sein, während zusätzlich vorhandene Klartexte nicht benötigt werden. Handelt es sich in einem anderen Fall z.B. um die Identifikation der Zieladresse eines Briefes in einer automatischen Briefverteilungsanlage, so ist die sogenannte Postleitzahl für die vorliegende Identifikationsaufgabe ausreichend, während zusätzlich vorhandene Klartexte bezüglich des Zielortes und der dortigen Adresse zumindest im Moment nicht benötigt werden.

Die erfindungsgemäße Vorrichtung soll also Textelemente bzw. Textfelder enthaltende Bereiche aus der Summe der digitalen Bilddaten automatisch so aufbereiten, daß nach deren Anzeige auf einer elektronischen Anzeigevorrichtung eine schnelle und gezielte Rekonstruktion genau der im jeweiligen Anwendungsfall für die vorliegende Identifikationsaufgabe benötigten Textelemente möglich wird, so daß weitere, aktuell nicht benötigte Überschußinformationen beinhaltende Textelemente bzw. Textfelder leicht übergehbar sind.

Hierzu enthält die elektronische Recheneinrichtung bevorzugt softwaremäßig ausgeführte erste Mittel, die bewirken, daß Bereiche auf der Oberfläche des Stückgutes, welche Texte bzw. Textfelder enthalten, in den digitalen Bilddaten datentechnisch lokalisiert werden. Diese in der Regel "dunkleren" Bereiche können z.B. aufgrund der Häufung von Helligkeitsintensitätswerten, welche in einem ausgewählten Größenbereich liegen, durch softwaremäßige umfangreiche Pixelwertvergleiche und Auswertungen detektiert und somit quasi von unbeschrifteten, in der Regel "helleren" Bereichen abgegrenzt bzw. separiert werden. Zweite, bevorzugt ebenfalls softwaremäßig ausgeführte Mitteln der elektronischen Recheneinrichtung können nun bewirken, daß den lokalisierten Bereichen und / oder insbesondere zeilenförmigen Ausschnitten daraus jeweils mindestens eine individuelle Kennung zugewiesen wird. Über diese Kennung ist es nun möglich, den dazugehörigen Bereich bzw. Ausschnitt gezielt datentechnisch automatisch oder z.B. über eine Tastatur manuell anzuwählen und in der Regel in einer zum Zwecke der verbesserten Lesbarkeit vergrößerten Darstellung auf der elektronischen Anzeigevorrichtung zu visualisieren.

Hierzu enthält die elektronische Recheneinrichtung dritte Mittel. Diese bewirken, daß in einem ersten Teilsichtfeld der elektronischen Anzeigevorrichtung bevorzugt gemeinsam alle lokalisierten Bereiche der abgetasteten Oberfläche mit den zugewiesenen Kennungen, und in einem zweiten Teilsichtfeld zumindest ein ausgewählter Bereich bzw. ein ausgewählter, insbesondere ein zeilenförmiger Ausschnitt daraus gemeinsam mit der jeweils zugewiesenen Kennung in vergrößerter Darstellung angezeigt werden.

Dies hat den Vorteil, daß einer zur Entschlüsselung der unleserlichen Texte eingesetzten Person in der Regel alle von den ersten Mitteln erkannten Bereiche zum einen übersichtlich im ersten Teilsichtfeld angezeigt werden und zum anderen die Bereiche bzw. insbesondere zeilenförmigen Ausschnitte aufgrund der automatischen Zuordnung einer Kennung auf einfache Weise anwählbar sind. Die Person hat somit für den Fall, daß die zur Identifikation benötigte Information in einem bestimmten Bereich bzw. Ausschnitt daraus zu finden ist, die Möglichkeit, diesen durch Anwahl von dessen Kennung z.B. über eine Tastatur oder Bedieneinheit gezielt in vergrößerter und damit besser lesbarer Form im zweiten Teilsichtfeld zur Ansicht zu bringen. Für den Fall, daß die Texte in den Bereichen im in einem ersten Teilsichtfeld besonders schlecht lesbar sind, können alle Bereiche bzw. Ausschnitt daraus sukzessive im zweiten Teilsichtfeld zur Ansicht gebracht werden, um die für die Identifikation des jeweiligen Objektes notwendige Textin formation aufzufinden. Schließlich kann auch automatisch durch die elektronische Recheneinrichtung gesteuert in Art einer Voreinstellung ein eine ausgewählte Kennung aufweisender Bereich bzw. Ausschnitt daraus im zweiten Teilsichtfeld präsentiert werden. Die Erfindung ermöglicht somit auf Grund der vollautomatischen Visualisierung eine schnelle Auffindung von schwer lesbaren Textelementen bzw. Textfeldern. Nach deren Rekonstruktion und manuellen Eingabe z.B. über eine Bedientastatur durch eine Person, kann z.B. der vollautomatische Weitertransport des nun identifizierten Objektes in der gleichen Weise vorgenommen werden, als ob die Identifikation vorher ebenfalls vollautomatisch stattgefunden hätte.

In Figur 2 ist beispielhaft eine derartige Visualisierung von digitalen Bilddaten am Beispiel der in Figur 1 abgetasteten Oberfläche eines Briefes SK dargestellt. Es ist somit ein von der erfindungsgemäßen Vorrichtung selbsttätig erzeugtes, bedienbares Prozeßabbild EA dargestellt. Es enthält eine erstes Teilsichtfeld 1, welches bevorzugt im oberen Bereich der Anzeigevorrichtung plaziert ist, und eine darunter befindliches zweites Teilsichtfeld 3. Im ersten Teilsichtfeld 1 sind die drei lokalisierten Bereiche AOI1, AOI2 und AOI3 aus den digitalen Bilddaten, welche Textelemente bzw. Textfelder enthalten, gemeinsam mit den zugewiesenen Kennungen A, B, C visualisiert. Durch Anwahl einer der Kennungen kann der dazugehörige Bereich in vergrößerter Darstellung im zweiten Teilsichtfeld zur Anzeige gebracht werden.

Im Beispiel der Figur 1 sind auch den zeilenförmigen Ausschnitten in den lokalisierten Bereichen AOI1, AOI2, AOI3 zusätzlich Kennungen automatisch zugewiesen. So sind den vier Textzeilen im Bereich AOI2 die Kennungen 1..4, einer lokalisierten Textzeile im Bereich AOI3 die Kennung 5 und den ebenfalls vier Textzeilen im Bereich AOI1 die Kennungen 6...9 zugewiesen. Alle Kennungen in Figur 1, d.h. A, B, C und 1...9 sind neben den dazugehörigen Bereichen bzw. Ausschnitten im Inneren von quadratischen Umrahmungen dargestellt. Hiermit ist es nun möglich entweder automatisch auf dem Wege einer Voreinstellung und durch manuelle Anwahl einer ausgewählten Kennung denjenigen, insbesondere zeilenförmigen Ausschnitt aus einem der Bereiche AOI1, AOI2, AOI3 vergrößert im zweiten Teilsichtfeld 3 zur Anzeige zu bringen, welcher mit der größten Wahrscheinlichkeit die im vorliegenden Fall zur Identifikation des Objektes SK benötigte Information enthält.

Da es sich bei dem Objekt SK im Beispiel der Figuren 1 und 2 um einen Brief handelt, wird im Falle einer automatischen Briefsortieranlage z.B. die Postleitzahl der Zieladresse, d.h. die Zahlenfolge 29416, zur Identifikation des Briefes benötigt. Diese konnte im vorliegenden Fall nicht automatisch z.B. mit einem OCR-Programm detektiert werden, da vom Absender eine maschinell nicht auswertbare Kunstschrift für die im Bereich AOI2 enthaltene Zieladresse verwendet wurde. So ist im zweiten Teilsichtfeld 3 derjenige, über die dazugehörige Kennung 1 angewählte Ausschnitt aus dem Bereich A vergrößert dargestellt, welcher die im vorliegenden Fall zur Identifikation des Briefes notwendige Zielpostleitzahl enthält. Diese kann nun entschlüsselt und manuell z.B. über eine Tastatur eingegeben werden.

Das Ergebnis dieser Eingabe kann vorteilhaft in einem dritten Teilsichtfeld 5 angezeigt werden, welches im Beispiel der Figur 2 in der Art einer Fußzeile am unteren Rand des Bildschirmsichtfeldes EA angezeigt wird. Im allgemeinen ist es gemäß einer weiteren Ausführung der Erfindung vorteilhaft, wenn die elektronische Recheneinrichtung PC vierte Mittel aufweist, die bewirken, daß ein drittes Teilsichtfeld 5 auf der elektronischen Anzeigeeinrichtung EA angezeigt wird, welches Werte enthält, die den aktuellen Status von den im zweiten Teilsichtfeld 3 angezeigten Bereich AOI2 bzw. einem Ausschnitt 1 daraus betreffen. Im Beispiel der Figur 1 enthält das dritte Teilsichtfeld 5 somit einen Hinweis auf die gesuchte Identifikationsinformation, im vorliegenden Fall auf eine Postleitzahl "PLZ:", ein weiteres Feld mit der Anzeige der von einer Person manuell eingegebenen Werte, im vorliegenden Fall einem Teil "29xxx" aus der vollständigen Postleitzahl 29416, und einem letzten Feld für sogenannte Statusmeldungen. Hierin kann z.B. angezeigt werden, ob die eingegebene Postleitzahl im Feld links davon, gültig ist oder nicht.

Bei einer anderen, nicht dargestellten Ausführung können z.B. nach Anwahl der Kennung eines Bereiches bzw. Ausschnittes daraus und dessen vergrößerter Darstellung im zweiten Teilsichtfeld vollautomatisch im ersten Teilsichtfeld in der Art einer Vorausschau die auf der Oberfläche eines folgenden Objektes lokalisierten Bereiche mit Textelementen bzw. Textfeldern visualisiert werden. Hiermit kann die Rekonstruktion von unleserlichen Texten auf den Oberflächen von einer Vielzahl von aufeinanderfolgenden Objekten, wie z.B. Briefen, erheblichen erleichtert werden.

Vorteilhaft zeigen gemäß einer weiteren Ausführung der Erfindung die dritten Mittel die lokalisierten Bereiche im ersten Teilsichtfeld so an, daß Ränder der Oberfläche des Stückgutes ausgeblendet sind. Da hierauf in aller Regel keine Textelemente bzw. Textfelder enthalten sind, können die dritten Mittel alle lokalisierten Bereiche mit den zugewiesenen Kennungen in einer bereits geringfügig vergrößerten, das erste Teilsichtfeld vollständig ausfüllenden Weise zur Anzeige bringen. Ein Vergleich der Darstellung der gesamten Briefoberfläche in Figur 1 mit der von den dritten Mitteln bewirkten Anzeige der digitalen Bilddaten in Figur 2 zeigt, daß dort die unbeschrifteten Ränder bereits ausgeblendet sind. Der relevante, die Bereiche AOI1, AOI2 und AOI3 mit Textelementen bzw. Textfeldern aufweisende Innenbereich der Oberfläche füllt das erste Teilsichtfeld vollständig aus. Hierdurch wird die Identifikation von unleserlichem Text bereits erleichtert.

Bei einer weiteren Ausführungsform der Erfindung sind die zweiten Mittel so gestaltet, daß diese den lokalisierten Bereichen eine Kennung mit einer von deren Lage auf der Oberfläche insbesondere eines Stückgutes abhängigen Wertigkeit zuweisen. So ist es insbesondere durch Programmsteuerung möglich, z.B. einem annähernd im Zentrum der abgetasteten Oberfläche liegenden Bereich eine im Vergleich zu den mehr am Rande liegenden Bereichen höherwertigere Kennung durch die zweiten Mittel automatisch zuzuweisen. Hiermit kann eine Art Vorauswahl derjenigen Bereiche vorgenommen werden, welche mit der größten Wahrscheinlichkeit diejenigen Textdaten enthalten, die z.B. für eine automatische weitere Beförderung bzw. Bearbeitung des Stückgutes notwendig sind.

Bei dem in den Figuren 1 und 2 dargestellten Beispiel der Oberfläche eines Briefes enthalten die in der Mitte liegenden Bereiche mit einer größeren Wahrscheinlichkeit die gewünschte Zielpostleitzahl, als die am Rande liegenden. Aus diesem Grund sind im Beispiel die zweiten Mittel so eingestellt, daß dem mittleren, wahrscheinlich die Zieladresse mit der gewünschten Postleitzahl enthaltenden Bereich AOI2 die Kennung mit der höchsten Wertigkeit A und den beiden übrigen, die Absenderadresse und den Poststempel enthaltenden Bereiche AOI1 und AOI3 Kennungen mit den niedrigeren Wertigkeiten B und C zugewiesen werden. Auch hierdurch wird die gezielte Anwahl von interessierenden Bereich beschleunigt. Bei anderen Anwendungen können die zweiten Mittel die Wertigkeiten auch nach anderen Kriterien zuordnen, wenn z.B. benötigte Textelemente bzw. allgemeine alphanumerische Zeichen oder Zeichenketten mit größerer Wahrscheinlichkeit in den Randbereichen bzw. einer kurzen oder längeren Kante der abgetasteten Oberfläche liegend zu erwarten sind.

Gemäß einer weiteren Ausgestaltung der Erfindung können die zweiten Mittel ferner so ausgestaltet sein, daß diese insbesondere zeilenförmigen Ausschnitten aus den lokalisierten Bereichen eine weitere Kennung zuweisen. Im Beispiel der Figur 2 ist eine derartige Ausführung bereits dargestellt. So sind den vier Textzeilen im Bereich AOI2 die weiteren Kennungen 1 bis 4, den vier Textzeilen im Bereich AOI1 die weiteren Kennungen 6 bis 9 und der einen Textzeile im Bereich AOI3 die weitere Kennung 5 beispielhaft zugeordnet. Durch Anwahl einer solchen Kennung z.B. über eine Bedientastatur ist es nun noch leichter möglich, einen ausgewählten Textausschnitt aus einem lokalisierten Bereich im zweiten Teilsichtfeld 3 in vergrößerten Darstellung zur Ansicht zu bringen. Im Beispiel der Figur 2 ist die mit der zusätzlichen Kennung 1 versehene untere Zeile im zweiten Teilsichtfeld 3 visualisiert. Diese enthält die im Beispiel gewünschte Information, nämlich die Postleitzahl, welche auf Grund der gewählten Schrifttype nicht maschinell dekodierbar ist, sondern unter Einsatz der erfindungsgemäßen Vorrichtung manuell entschlüsselt werden muß.

In diesem Fall können die zweiten Mittel ebenfalls so ausgestaltet sein, daß diese den insbesondere zeilenförmigen Ausschnitten aus einem lokalisierten Bereich eine wiederum von deren Lage im lokalisierten Bereich abhängige Wertigkeit zuweisen. Im Beispiel der Figur 2 ist eine derartige Ausführung ebenfalls bereits dargestellt. So sind z.B. den vier Textzeilen des mittleren, die Zieladresse enthaltenden Bereichs AOI2 von unten nach oben Wertigkeiten mit abnehmender Kennung zugewiesen. Dies entspricht im dargestellten Anwendungsfall einer Briefoberfläche der Tatsache, daß die gesuchte Postleitzahl mit der größten Wahrscheinlichkeit in einem der am unteren Ende eines Bereiches plazierten Textfelder enthalten ist. Bei anderen Anwendungen können die zweiten Mittel die zusätzlichen Kennungen auch nach anderen Kriterien zuweisen.

Vorteilhaft können insbesondere programmgesteuert die dritten Mittel im zweiten Teilsichtfeld den Bereich bzw. einen Ausschnitt daraus anzeigen, dessen Kennung eine ausgewählte Wer tigkeit aufweist. So sind beispielsweise die zweiten Mittel bei dem in den Figuren dargestellten Beispiel so voreingestellt, daß der zeilenförmige Textausschnitt mit der höchsten Wertigkeit aus dem ebenfalls die höchste Wertigkeit aufweisenden lokalisierten Bereich automatisch zur Anzeige gebracht wird. Dies hat im Beispiel der Figur 2 die Anzeige der unteren Zeile mit der Wertigkeit 1 aus dem mittleren Bereich AOI2 mit der Wertigkeit A zur Folge, welche richtigerweise die gesuchte Postleitzahl und den Zielort enthält, im Beispiel "29416 BAARS".

Zusätzlich kann die elektronische Recheneinrichtung vierte Mittel aufweisen, die bewirken, daß ein drittes Teilsichtfeld auf der elektronischen Anzeigeeinrichtung angezeigt wird, welches Werte enthält, die den aktuellen Status von dem im zweiten Teilsichtfeld angezeigten Bereich bzw. einen Ausschnitt daraus betreffen. Im Beispiel der Figur 2 ist ein derartiges Statusfeld in der Mitte am unteren Rand des Bildschirmsichtfeldes EA dargestellt und mit dem Begriff *Status-meldung* beschriftet. Dort kann z.B. angezeigt werden, ob eine manuell eingegebene und links davon visualisierte Postleitzahl zulässig, d.h. im Vorrat aller Postleitzahlen enthalten ist.

Schließlich kann die elektronische Recheneinrichtung fünfte Mittel aufweisen, die bewirken, daß ein viertes Teilsichtfeld auf der elektronischen Anzeigeeinrichtung angezeigt wird, welches Werte enthält, die den aktuellen Status der gesamten Vorrichtung betreffen. Im Beispiel der Figur 2 ist ein derartiges viertes Teilsichtfeld 7 am rechten Randbereich des Bildschirmsichtfeldes EA der elektronischen Anzeigevorrichtung zur Anzeige gebracht. Es enthält Felder mit z.B. den Beschriftungen *Stoffmangel*, *Störung Anlage, Störung Codierplatz* u.s.w.. Hiermit können aktuelle Betriebszustände der Anlage visualisiert bzw. unter Umständen verändert werden. So kann über das Feld Stoffmangel z.B. durch eine entsprechende ereignisgesteuerte farbige Gestaltung einem Bediener signalisiert werden, daß aktuelle keine Briefe mit nicht automatisch dekodierbaren Postleitzahlen vorliegen. Andererseits kann der Bediener durch Anwahl z.B. der Felder *Eingabe* oder *Pause* die erfindungsgemäße Vorrichtung aktivieren oder abschalten. Der betriebsbereite Zustand und die jeweils vorliegende Betriebsart der Vorrichtung können dem Bediener schließlich über die Felder *angemeldet* und Betriebsart: *Komplette PLZ* signalisiert werden.

Die Erfindung hat den Vorteil, daß die relevanten Bilddaten zum Zwecke einer visuell optimalen Auswertbarkeit vollautomatisch aufbereitet angezeigt werden. Insbesondere durch die erfindungsgemäße automatische Lokalisierung von Bereichen mit Texten und der Zuordnung von Kennungen zu Textelementen, Textfeldern bzw. zeilenförmigen Ausschnitten im ersten Teilsichtfeld wird es erheblich erleichtert, diese durch automatische und/oder manuelle Anwahl separat und gezoomt im zweiten Teilsichtfeld zu visualisieren. Die Erfindung hat den Vorteil, einen Bereich bzw. Ausschnitt über dessen Kennung automatisch oder z.B. über eine Tastatur manuell anzuwählen und zur besseren Lesbarkeit in einer vergrößerten Darstellung auf der elektronischen Anzeigevorrichtung zu visualisieren.

Die Erfindung ist uneingeschränkt für alle Schreibzeichensätze anwendbar, so z.B. für arabische, asiatische Sprachzeichensatze.

## Patentansprüche

1. Vorrichtung zur automatischen Visualisierung von auf einer Oberfläche insbesondere eines Stückgutes (SK) befindlichen alphanumerischen Textelementen auf einer elektronischen Anzeigevorrichtung (EA), mit
a) einer elektronischen Abtasteinrichtung (ZK,AK,L1,L2), welche die Oberfläche abtastet und digitale Bilddaten (DB) erzeugt,
b) einer programmgesteuerte Recheneinrichtung (PC), mit
b1) ersten Mitteln, die bewirken, daß in den digitalen Bilddaten (DB) Textelemente enthaltende Bereiche (AOI1,AOI2,AOI3) der Oberfläche lokalisiert werden,
b2) zweiten Mitteln, die bewirken, daß zumindest den lokalisierten Bereichen (AOI1,AOI2,AOI3) mindestens eine Kennung ("A", "B", "C"; "1"..."9") zugewiesen wird, und mit
b3) dritten Mitteln, die bewirken, daß auf der elektronischen Anzeigevorrichtung (EA) angezeigt werden
b31) in einem ersten Teilsichtfeld (1) lokalisierte Bereiche (AOI1,AOI2,AOI3), bevorzugt gemeinsam alle lokalisierten Bereiche, mit den zugewiesenen Kennungen ("A", "B", "C"; "1" ... "9"), und
b32) in einem zweiten Teilsichtfeld (3) zumindest einer der Bereiche (AOI2) mit der zugewiesenen Kennung ("1") in vergrößerter Darstellung.

2. Vorrichtung nach Anspruch 1, wobei die zweiten Mittel den lokalisierten Bereichen (AOI1,AOI2,AOI3) eine Kennung mit einer von deren Lage auf der Oberfläche insbesondere eines Stückgutes (SK) abhängigen Wertigkeit ("A" ... "C"; "1" ... "9") zuweisen.

3. Vorrichtung nach einem der vorangegangenen Ansprüche, wobei die zweiten Mittel zeilenförmigen Ausschnitten aus den lokalisierten Bereichen (AOI1,AOI2,AOI3) eine weitere Kennung ("1"..."9") zuweisen.

4. Vorrichtung nach Anspruch 3, wobei die zweiten Mittel den zeilenförmigen Ausschnitten aus einem lokalisierten Bereich (AOI1,AOI2,AOI3) eine von deren Lage im lokalisierten Bereich abhängige Wertigkeit ("1"..."9") zuweisen.

5. Vorrichtung nach Anspruch 2, 3 oder 4, wobei die dritten Mittel im zweiten Teilsichtfeld (3) den Bereich bzw. einen Ausschnitt daraus anzeigen, dessen Kennung eine ausgewählte Wertigkeit aufweist.

6. Vorrichtung nach einem der vorangegangenen Ansprüche, wobei die elektronische Recheneinrichtung (PC) vierte Mittel aufweist, die bewirken, daß ein drittes Teilsichtfeld (5) auf der elektronischen Anzeigeeinrichtung (EA) angezeigt wird, welches Werte enthält, die den aktuellen Status von den im zweiten Teilsichtfeld (3) angezeigten Bereich (AOI2) bzw. einem Ausschnitt (1) daraus betreffen.

7. Vorrichtung nach einem der vorangegangenen Ansprüche, wobei die elektronische Recheneinrichtung (PC) fünfte Mittel aufweist, die bewirken, daß ein viertes Teilsichtfeld (7) auf der elektronischen Anzeigeeinrichtung (EA) angezeigt wird, welches Werte enthält, die den aktuellen Status der gesamten Vorrichtung betreffen.

8. Vorrichtung nach einem der vorangegangenen Ansprüche, wobei die dritten Mittel die lokalisierten Bereiche (AOI1,AOI2, AOI3) im ersten Teilsichtfeld (1) so anzeigen, daß Ränder der Oberfläche ausgeblendet sind.

## Claims

1. Device for automatic visualization of alphanumeric text elements located on a surface, especially of an individual item (II), on an electronic display device (EDD), having
a) an electronic scanning device (ZK, AK, L1, L2) which scans the surface and generates digital image data (DID),
b) a program-controlled computer (PC) having
b1) first means, by which regions (AOI1, AOI2, AOI3) of the surface which contain text elements in the digital image data (DID) are located,
b2) second means, by which at least one identifier ("A", "B", "C"; "1"..."9") is allocated at least to the located regions (AOI1, AOI2, AOI3), and having
b3) third means, by which
b31) located regions (AOI1, AOI2, AOI3), preferably all the located regions together, with the allocated identifiers ("A", "B", "C"; "1" ... "9") are displayed in a first partial view panel (1) on the electronic display device (EDD), and
b32) at least one of the regions (AOI2) with the allocated identifier ("1") is displayed in an enlarged representation in a second partial view panel (3) on the electronic display device (EDD).

2. Device according to Claim 1, the second means allocating the located regions (AOI1, AOI2, AOI3) an identifier with a weight ("A"..."C"; "1" ... "9") which depends on the position of the said identifier on the surface, especially of an individual item (II).

3. Device according to one of the preceding claims, the second means allocating linear sections of the located regions (AOI1, AOI2, AOI3) a further identifier ("1" ... "9").

4. Device according to Claim 3, the second means allocating the linear sections of a located region (AOI1, AOI2, AOI3) a weight ("1" ... "9") which depends on the position of the said sections in the located region.

5. Device according to Claim 2, 3 or 4, the third means displaying in the second partial view panel (3) the region or a section thereof whose identifier has a selected weight.

6. Device according to one of the preceding claims, the electronic computer (PC) having fourth means by which there is displayed on the electronic display device (EDD) a third partial view panel (5), which contains values which relate to the current status of the region (AOI2), or a section (1) thereof, displayed in the second partial view panel (3).

7. Device according to one of the preceding claims, the electronic computer (PC) having fifth means, by which there is displayed on the electronic display device (EDD) a fourth partial view panel (7), which contains values which relate to the current status of the overall device.

8. Device according to one of the preceding claims, the third means displaying the located regions (AOI1, AOI2, AOI3) in the first partial view panel (1) in such a way that edges of the surface are masked out.

## Revendications

1. Dispositif pour visualiser automatiquement sur un dispositif d'affichage électronique (EA) des éléments de texte alphanumériques qui se trouvent sur une surface notamment d'une marchandise (SK), comportant
a) un dispositif d'analyse électronique (ZK, AK, L1, L2) qui analyse la surface et produit des données vidéo numériques (DB),
b) un dispositif de calcul commandé par programme (PC) comportant
b1) des premiers moyens qui localisent dans les données vidéo numériques (DB) des zones (AOI1, AOI2, AOI3) de la surface qui contiennent des éléments de texte,
b2) des deuxièmes moyens qui attribuent au moins aux zones localisées (AOI1, AOI2, AOI3) au moins un identificateur ("A", "B", "C" ; "1" ... "9"),
b3) des troisièmes moyens qui affichent sur le dispositif d'affichage électronique (EA)
b31) dans une première sous-fenêtre (1), des zones localisées (AOI1, AOI2, AOI3), de préférence toutes les zones localisées en même temps, avec les identificateurs attribués ("A", "B", "C" ; "1" ... "9")
b32) dans une deuxième sous-fenêtre (3), au moins l'une des zones (AOI2) avec l'identificateur attribué ("1") dans une représentation en plus gros.

2. Dispositif selon la revendication 1, dans lequel les deuxièmes moyens attribuent aux zones localisées (AOI1, AOI2, AOI3) un identificateur avec une valeur ("A" ... "C" ; "1" ... "9") dépendante de leur position sur la surface notamment d'une marchandise (SK).

3. Dispositif selon l'une des revendications précédentes, dans lequel les deuxièmes moyens attribuent à des extraits en forme de lignes des zones localisées (AOI1, AOI2, AOI3) un autre identificateur ("1" ... "9").

4. Dispositif selon la revendication 3, dans lequel les deuxièmes moyens attribuent aux extraits en forme de lignes d'une zone localisée (AOI1, AOI2, AOI3) une valeur ("1" ... "9") dépendante de leur position dans la zone localisée.

5. Dispositif selon la revendication 2, 3 ou 4, dans lequel les troisièmes moyens affichent dans la deuxième sous-fenêtre (3) la zone ou un extrait de celle-ci dont l'identificateur a une valeur sélectionnée.

6. Dispositif selon l'une des revendications précédentes, dans lequel le dispositif de calcul électronique (PC) comporte des quatrièmes moyens qui affichent sur le dispositif d'affichage électronique (EA) une troisième sous-fenêtre (5) qui contient des valeurs qui concernent l'état actuel de la zone (AOI2) ou d'un extrait (1) de celle-ci affiché dans la deuxième sous-fenêtre (3).

7. Dispositif selon l'une des revendications précédentes, dans lequel le dispositif de calcul électronique (PC) comporte des cinquièmes moyens qui affichent sur le dispositif d'affichage électronique (EA) une quatrième sous-fenêtre (7) qui contient des valeurs qui concernent l'état actuel de l'ensemble du dispositif.

8. Dispositif selon l'une des revendications précédentes, dans lequel les troisièmes moyens affichent les zones localisées (AOI1, AOI2, AOI3) dans la première sous-fenêtre (1) de telle sorte que des bords de la surface sont supprimés.
